# FASCICULE DE BREVET EUROPEEN

(11) **EP 3 976 425 B1**
(45) Date de publication et mention de la délivrance du brevet: **01.11.2023**
(21) Numéro de dépôt: 20720824.0
(22) Date de dépôt: 23.04.2020
(51) Int. Cl.: B60R 21/215

(54) **VÉHICULE DOTÉ DE VOLETS D'AIRBAG PASSAGER ALLÉGÉS**
FAHRZEUG MIT LEICHTEN INSASSENAIRBAGKLAPPEN
VEHICLE PROVIDED WITH LIGHT PASSENGER AIRBAG FLAPS

(30) Priorité: 29.05.2019 FR 1905727
(43) Date de publication de la demande: 06.04.2022
(73) Titulaire: Renault s.a.s, 92100 Boulogne Billancourt (FR)
(72) Inventeur: CORRE, Jean-Marie, 78770 THOIRY (FR)
(74) Mandataire: Renault Group
(86) Numéro de dépôt international: PCT/EP2020/061303
(87) Numéro de publication internationale: WO 2020/239333

(56) Documents cités:
- EP-A1- 1 759 935
- DE-A1- 19 701 564
- DE-A1- 19 837 421
- FR-A1- 2 784 627
- FR-A1- 3 007 350

## Description

La présente invention concerne un véhicule doté de volets d'un airbag passager allégés.

Pour la suite de la description, il est sous-entendu que le déploiement de l'airbag n'intervient que suite à un choc accidentel du véhicule contre un obstacle extérieur.

Actuellement, les airbags passagers sont placés dans un logement de la planche de bord délimité par une paroi latérale qui est incluse dans ladite planche de bord. Cette paroi latérale est obturée par une couche en polypropylène injecté possédant une zone centrale de plus faible épaisseur, de manière à pouvoir s'ouvrir en deux, sous l'effet du déploiement de l'airbag. Cette solution est certes efficace, mais présente l'inconvénient de posséder un poids important, susceptible d'alourdir le véhicule. EP1759935A1, qui est considéré comme l'état de la technique le plus proche de l'objet de la revendication 1, divulgue un véhicule comprenant une planche de bord doté d'un logement délimité par une paroi latérale incluse dans la planche de bord et destiné à recevoir à un airbag, dont le logement est obturé par une paroi de fermeture arasant une surface de la planche de bord et comprenant deux filets, et une couche dans laquelle sont noyés lesdits filets, et dont les deux filets sont fixés à la paroi latérale et s'étendent l'un vers l'autre en ménageant entre eux un espace, la paroi latérale étant prolongée par une collerette élargie et plane s'inscrivant dans un plan qui est perpendiculaire à la paroi latérale, et les deux filets sont fixés à cette collerette.

Un véhicule selon l'invention, possède un airbag passager qui est parfaitement opérationnel dans le cas d'un choc accidentel du véhicule, mais qui présente un poids allégé par rapport à celui des airbags existants.

L'invention a pour objet un véhicule comprenant une planche de bord doté d'un logement délimité par une paroi latérale incluse dans la planche de bord et destiné à recevoir un airbag.

Selon l'invention, le logement est obturé par une paroi de fermeture arasant une surface de la planche de bord et comprenant deux filets et une couche de polypropylène expansé dans laquelle sont noyés lesdits filets, les deux filets étant fixés à la paroi latérale et s'étendant l'un vers l'autre en ménageant entre eux un espace. Le principe de l'invention est de remplacer le polypropylène injecté de la paroi de fermeture par du polypropylène expansé et d'y ajouter une structure de retenue déformable, sous la forme de filets. En effet, les filets qui sont fixés à la paroi latérale du logement, vont retenir les tronçons de la paroi de fermeture qui vont être crées lors de l'ouverture brutale de cette paroi de fermeture provoquée par le déploiement de l'airbag. De cette manière, lesdits tronçons ne vont pas se détacher puis se propager de façon aléatoire dans l'habitacle du véhicule, risquant de causer des blessures sur les occupants dudit véhicule. Ainsi, grâce à ce changement de matériau, le logement de l'airbag comprenant notamment la paroi de fermeture, est plus léger que les logements d'airbag existants. Les filets sont préférentiellement constitués de mailles et sont fabriqués avec un matériau présentant une certaine résistance à la rupture. Le terme « arasant » n'exclut pas qu'une peau auto-sécable de la planche de bord puisse recouvrir la paroi de fermeture. L'espace subsistant entre les deux filets va permettre à la paroi de fermeture de s'ouvrir sans résistance au niveau dudit espace, lors du déploiement de l'airbag. Il est supposé qu'avec une telle configuration, la paroi de fermeture va s'ouvrir en deux tronçons. L'airbag est classiquement arrimé à la paroi latérale au moyen de crochets de maintien.

Selon une caractéristique possible de l'invention, les deux filets sont dans la continuité l'un de l'autre. Dans une configuration idéale, lorsque les deux filets sont noyés dans le polypropylène expansé, ils sont plans et parfaitement alignés l'un sur l'autre. Autrement dit, ils s'inscrivent dans le même plan.

Selon l'invention, les deux filets sont surmoulés dans la couche de polypropylène expansé. Une fois que les filets auront été surmoulés dans la couche de polypropylène expansé, ils sont enfouis dans ladite couche et ne sont plus visibles.

Selon l'invention, la paroi latérale est prolongée par une collerette élargie et plane s'inscrivant dans un plan qui est perpendiculaire à la paroi latérale, les deux filets étant fixés à cette collerette. De cette manière, la surface de contact entre chaque filet et la collerette est étendue, renforçant la liaison entre lesdits filets et ladite collerette.

Selon l'invention, une partie de la paroi latérale et la collerette sont surmoulées dans la couche de polypropylène expansé.

Selon une caractéristique possible de l'invention, la couche de polypropylène expansé présente une zone de plus faible épaisseur au niveau de l'espace situé entre les deux filets. Cette zone de plus faible épaisseur constitue une zone de faiblesse structurelle, par laquelle la paroi de fermeture va s'ouvrir sous l'effet du déploiement de l'airbag. Cette zone d'épaisseur réduite va guider la rupture de la paroi de fermeture pour former deux tronçons d'ouverture.

Selon une caractéristique possible de l'invention, la couche de polypropylène expansé présente deux zones latérales de plus faible épaisseur au niveau de la paroi latérale. Ces zones de plus faible épaisseur, sont destinées à faciliter la pliure de chacun des deux tronçons qui vont être crées lors de l'ouverture de la paroi de fermeture sous l'effet du déploiement de l'airbag. Chronologiquement, la paroi de fermeture va d'abord s'ouvrir en deux tronçons, puis lesdits deux tronçons vont chacun poursuivre leur course en rotation, en se pliant pour créer une ouverture par laquelle l'airbag va s'étendre.

Selon une caractéristique possible de l'invention, les filets sont fabriqués dans un matériau à choisir parmi du textile, du plastique et un métal. En effet, ces filets doivent demeurer léger tout en présentant une certaine résistance à la rupture pour empêcher les tronçons issus de la paroi de fermeture et qui auront été crées lors du déploiement de l'airbag, de se détacher et de se déplacer dans l'habitacle du véhicule.

Un véhicule selon l'invention présente l'avantage de posséder un airbag opérationnel dans le cas d'un choc accidentel du véhicule contre un obstacle extérieur, tout en demeurant léger grâce à une optimisation du logement destiné à enfermer l'airbag. Il a de plus l'avantage de conserver les mêmes espaces libres qu'un véhicule existant, car le montage de l'airbag s'effectue dans un espace constant par rapport à celui des véhicules existants.

On donne, ci-après, une description détaillée d'un mode de réalisation préféré d'un véhicule selon l'invention, en se référant aux figures ci-après :
[Fig. 1] est une vue en perspective simplifiée de l'intérieur d'un véhicule selon l'invention montrant l'emplacement de l'airbag,
[Fig. 2] est une vue en coupe axiale longitudinale d'un véhicule selon l'état de la technique montrant l'emplacement de l'airbag,
[Fig. 3] est une vue en coupe axiale longitudinale de la zone d'un véhicule selon l'invention, contenant un airbag dans une configuration rangée,
[Fig. 4] est une vue en coupe axiale longitudinale de la zone de la figure 3, pour laquelle l'airbag est dans une configuration déployée,
[Fig. 5] est une vue du dessous d'un airbag d'un véhicule selon l'invention.

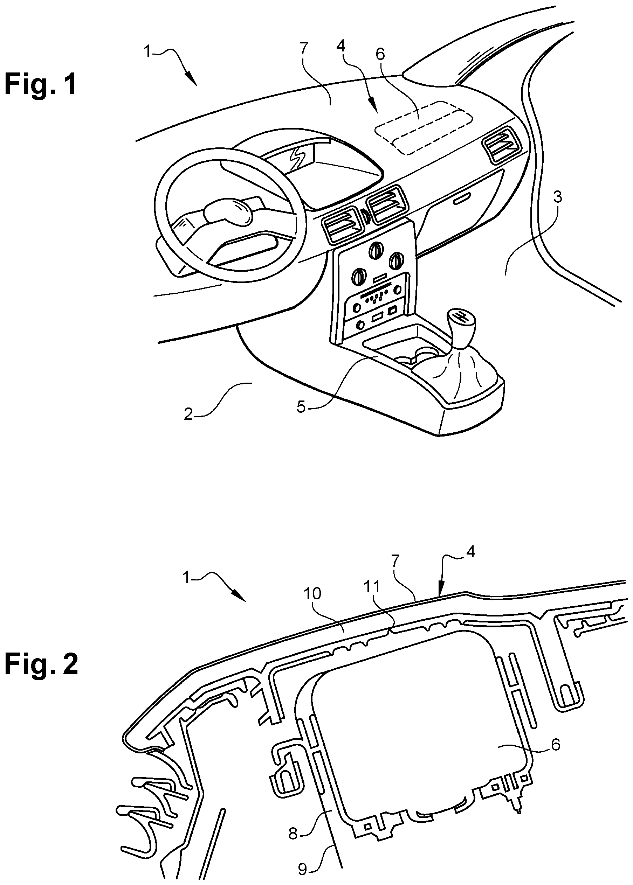

En se référant à la figure 1, un véhicule automobile 1 comprend généralement un habitacle dans lequel sont positionnés un siège conducteur 2, un siège passager 3, une planche de bord 4 et une console centrale 5 séparant ledit siège passager 3 et ledit siège conducteur 2. Un airbag 6 passager est placé à l'intérieur de la planche de bord 4 juste devant le siège passager 3. Pour des questions essentiellement d'esthétisme, la planche de bord 4 est dotée d'une peau de surface 7 continue, recouvrant l'airbag 6 passager, ladite peau 7 étant sécable au niveau dudit airbag 6 pour permettre à celui-ci de se déployer dans le cas d'un choc du véhicule 1 contre un obstacle extérieur.

En se référant à la figure 2, dans un véhicule 1 de l'état de la technique, la planche de bord 4 comprend un logement 8 délimité par une paroi latérale 9 et destiné à recevoir l'airbag passager 6. Cette paroi latérale 9 est incluse dans la planche de bord 4 et est obturée par une paroi de fermeture 10 réalisée en matière injectée en polypropylène, ladite paroi de fermeture 10 étant recouverte par la peau 7 de la planche de bord 4. Cette paroi de fermeture 10 est injectée directement sur la paroi latérale 9 et possède une zone centrale 11 de plus faible épaisseur par laquelle ladite paroi de fermeture 10 va s'ouvrir lors d'un déploiement de l'airbag 6. Une fois l'airbag déployé 6, la paroi de fermeture 10 se retrouve sous la forme de deux volets sensiblement parallèles et émergeant de la planche de bord 4 dans une direction sensiblement perpendiculaire à une surface de ladite planche de bord 4. Cette configuration de montage est certes efficace, mais présente l'inconvénient de mettre en oeuvre un matériau assez lourd, le polypropylène injecté, ayant tendance à accroitre le poids du véhicule 1.

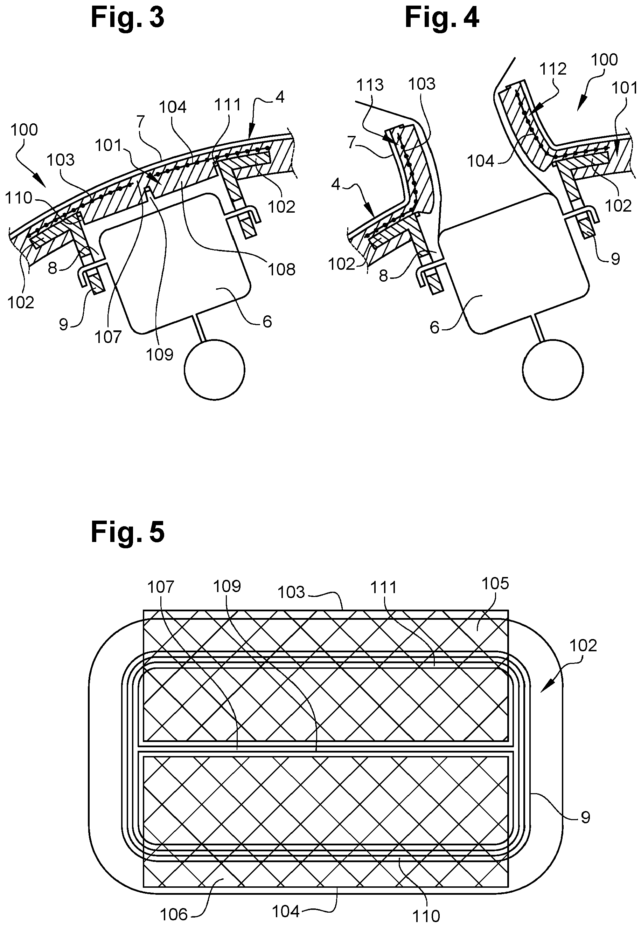

En se référant aux figures 3 et 5, dans un véhicule 100 selon l'invention le polypropylène injecté est remplacé par du polypropylène expansé. A l'image d'un véhicule 1 selon l'état de la technique, la planche de bord 4 comprend un logement 8 délimité par une paroi latérale 9 et destiné à recevoir l'airbag passager 6. Cette paroi latérale 9 est incluse dans la planche de bord 4 et est obturée par une paroi de fermeture 101 réalisée en polypropylène expansé, ladite paroi de fermeture 101 étant recouverte par la peau 7 de la planche de bord 4.

Plus précisément, en se référant à la figure 5, la paroi latérale 9 délimite un logement de forme parallélépipédique et est prolongée par une collerette 102 assimilable à un cadre de forme rectangulaire s'inscrivant dans un plan qui est perpendiculaire à la direction d'la paroi latérale 9.

En se référant aux figures 3, 4 et 5, deux filets 103, 104 sont chacun fixés à un grand segment 105, 106 de la collerette 102 et s'étendent l'un vers l'autre en ménageant entre eux un espace 107. En première approximation, les deux filets 103, 104 sont plans et sont parfaitement alignés l'un sur l'autre. Autrement dit, lesdits filets 103, 104 sont inscrits dans un même plan. Les filets 103, 104 doivent être légers et présenter une certaine résistance à la rupture. Ils peuvent ainsi être réalisés par exemple en métal, en plastique ou en textile. Ces filets 103, 104 peuvent par exemple être fixés par collage à la collerette 102 de la paroi latérale 9.

En se référant aux figures 3 et 4, la collerette 102, une extrémité de la paroi latérale 9 du côté de laquelle est située ladite collerette 102, et les deux filets 103, 104 sont surmoulés dans le polypropylène expansé. On obtient ainsi une couche 108 de polypropylène expansé enrobant les deux filets 103, 104, la collerette 102 et une partie de la paroi latérale 9. Cette couche 108 présente une zone centrale 109 de plus faible épaisseur, située au droit de l'espace 107 ménagé entre les deux filets 103, 104. Cette couche 108 présente également deux zones latérales 110, 111 de plus faible épaisseur, situées à l'intérieur et au contact de la paroi latérale 9.

Un procédé de montage d'un airbag 6 pour la réalisation d'un véhicule 100 selon l'invention, comprend les étapes suivantes :
- Une étape de fixation des deux filets 103, 104 à la collerette 102 de la paroi latérale 9 délimitant le logement 8 de l'airbag 6,
- Une étape de surmoulage de la collerette 102, d'une extrémité de la paroi latérale 9 située du côté de ladite collerette 102 et des deux filets 103, 104 dans le polypropylène expansé.
- Une étape de montage de l'ensemble constitué par la paroi latérale 9 et la collerette 106, les deux filets 103, 104 et le polypropylène expansé dans la planche de bord 4 du véhicule 100,
- Une étape de fixation de l'airbag 6 dans la paroi latérale 9.

En se référant à la figure 4, lors d'un choc du véhicule 100 avec un obstacle extérieur, l'airbag 6 va se déployer en exerçant une pression sur la paroi de fermeture 101 et donc sur la couche 108 de polypropylène expansé, qui va s'ouvrir au niveau de sa zone centrale 109 de plus faible épaisseur. Cette ouverture va engendrer la création de deux volets 112, 113 qui vont pivoter autour des deux zones latérales 110, 111 de moindre épaisseur de la couche 108 de polypropylène expansé. Les deux volets 112, 113 vont ainsi se retrouver dans leur état final, perpendiculaires à une surface de la planche de bord 4. Chaque volet 112, 113 contient un filet 103, 104 de retenue empêchant ledit volet 112, 113 de se détacher de la paroi latérale 9 et de se déplacer de façon aléatoire dans le véhicule 100, risquant de blesser un occupant dudit véhicule 100.

## Revendications

1. Véhicule (1, 100) comprenant une planche de bord (4) doté d'un logement (8) délimité par une paroi latérale (9) incluse dans la planche de bord (4) et destiné à recevoir à un airbag (6), dont le logement (8) est obturé par une paroi de fermeture (101) arasant une surface (7) de la planche de bord (4) et comprenant deux filets (103, 104) et une couche (108) dans laquelle sont noyés lesdits filets (103, 104), les deux filets (103, 104) étant fixés à la paroi latérale (9, 102) et s'étendent l'un vers l'autre en ménageant entre eux un espace (107), la paroi latérale (9) étant prolongée par une collerette (102) élargie et plane s'inscrivant dans un plan qui est perpendiculaire à la paroi latérale (9), les deux filets (103, 104) étant fixés à cette collerette (102), **caractérisé en ce que** la couche (108) est en propylène expansé et **en ce que** les deux filets (103, 104), une partie de la paroi latérale (9) et la collerette (102) sont surmoulés dans la couche de polypropylène expansé (108).

2. Véhicule selon la revendication 1, **caractérisé en ce que** les deux filets (103, 104) sont dans la continuité l'un de l'autre.

3. Véhicule selon l'une quelconque des revendications 1 ou 2, **caractérisé en ce que** la couche de polypropylène expansé (108) présente une zone (109) de plus faible épaisseur au niveau de l'espace (107) situé entre les deux filets (103, 104).

4. Véhicule selon l'une quelconque des revendications 1 à 3, **caractérisé en ce que** la couche de polypropylène expansé (108) présente deux zones latérales (110, 111) de plus faible épaisseur au niveau de la paroi latérale (9).

5. Véhicule selon l'une quelconque des revendications 1 à 4, **caractérisé en ce que** les filets (103, 104) sont fabriqués dans un matériau à choisir parmi du textile, du plastique et un métal.

## Patentansprüche

1. Fahrzeug (1, 100), welches ein Armaturenbrett (4) umfasst und mit einem Fach (8) ausgestattet ist, das von einer in das Armaturenbrett (4) integrierten Seitenwand (9) begrenzt wird und dazu bestimmt ist, einen Airbag (6) aufzunehmen, wobei das Fach (8) durch eine Verschlusswand (101) verschlossen ist, die mit einer Oberfläche (7) des Armaturenbretts (4) bündig ist und zwei Netze (103, 104) und eine Schicht (108), in welche die Netze (103, 104) eingebettet sind, umfasst, wobei die zwei Netze (103, 104) an der Seitenwand (9, 102) befestigt sind und sich aufeinander zu erstrecken, wobei sie zwischen sich einen Zwischenraum (107) bilden, wobei die Seitenwand (9) durch einen verbreiterten und ebenen Flansch (102) verlängert wird, der sich entlang einer Ebene erstreckt, welche zur Seitenwand (9) senkrecht ist, wobei die zwei Netze (103, 104) an diesem Flansch (102) befestigt sind, **dadurch gekennzeichnet, dass** die Schicht (108) aus geschäumten Propylen besteht, und dadurch, dass die zwei Netze (103, 104), ein Teil der Seitenwand (9) und der Flansch (102) mit der Schicht aus geschäumten Polypropylen (108) umspritzt sind.

2. Fahrzeug nach Anspruch 1, **dadurch gekennzeichnet, dass** die zwei Netze (103, 104) in Fortsetzung zueinander angeordnet sind.

3. Fahrzeug nach einem der Ansprüche 1 oder 2, **dadurch gekennzeichnet, dass** die Schicht aus geschäumten Polypropylen (108) an dem Zwischenraum (107), der sich zwischen den zwei Netzen (103, 104) befindet, einen Bereich (109) geringerer Dicke aufweist.

4. Fahrzeug nach einem der Ansprüche 1 bis 3, **dadurch gekennzeichnet, dass** die Schicht aus geschäumten Polypropylen (108) an der Seitenwand (9) zwei seitliche Bereiche (110, 111) geringerer Dicke aufweist.

5. Fahrzeug nach einem der Ansprüche 1 bis 4, **dadurch gekennzeichnet, dass** die Netze (103, 104) aus einem Material hergestellt sind, das aus Textilmaterial, Kunststoff und einem Metall gewählt ist.

## Claims

1. Vehicle (1, 100) comprising a dashboard (4) provided with a housing (8) delimited by a lateral wall (9) included in the dashboard (4) and intended to receive an airbag (6), of which the housing (8) is closed off by a closure wall (101) that is flush with a surface (7) of the dashboard (4) and comprising two nets (103, 104) and a layer (108) in which said nets (103, 104) are embedded, the two nets (103, 104) being attached to the lateral wall (9, 102) and extending towards one another, creating a space (107) between them, the lateral wall (9) being extended by a widened and planar collar (102) that lies in a plane that is perpendicular to the lateral wall (9), the two nets (103, 104) being attached to this collar (102), **characterized in that** the layer (108) is made of expanded polypropylene and **in that** the two nets (103, 104), a part of the lateral wall (9) and the collar (102) are overmoulded into the layer of expanded polypropylene (108) .

2. Vehicle according to Claim 1, **characterized in that** the two nets (103, 104) extend in line with one another.

3. Vehicle according to either one of Claims 1 and 2, **characterized in that** the layer of expanded polypropylene (108) has a region (109) of reduced thickness in the area of the space (107) located between the two nets (103, 104) .

4. Vehicle according to any one of Claims 1 to 3, **characterized in that** the layer of expanded polypropylene (108) has two lateral regions (110, 111) of reduced thickness in the area of the lateral wall (9).

5. Vehicle according to any one of Claims 1 to 4, **characterized in that** the nets (103, 104) are made of a material that is to be chosen among textile, plastic and a metal.
